# EUROPEAN PATENT SPECIFICATION

(11) **EP 1 701 495 B1**
(45) Date of publication and mention of the grant of the patent: **07.05.2008**
(21) Application number: 05425134.3
(22) Date of filing: 09.03.2005
(51) Int. Cl.: H04L 12/64

(54) **Hybrid digital cross-connect for switching circuit and packet based data traffic**
Hybrides digitales Koppelfeld zur Vermittlung von Leitungs- und paketbasierten Datenströmen
Commutateur hybride numérique pour commuter le trafic de données par circuit et par paquets

(43) Date of publication of application: 13.09.2006
(73) Proprietor: Nokia Siemens Networks GmbH & Co. KG, 81541 München (DE)
(72) Inventor: Saracino, Sante, 02015 Città Ducale (IT)

(56) References cited:
- EP-A- 0 456 947
- EP-A- 0 528 206
- EP-A- 1 255 385

## Description

### FIELD OF THE INVENTION

The present invention relates to the field of digital communications networks, and more precisely to a hybrid digital cross-connect (DCX) for switching circuits and packets transport signals under standard interfaces.

To simplify the disclosure, used acronyms are listed in **APPENDIX A** and bibliographic References are given in **APPENDIX B.**

As known, digital communications networks are subdivided in circuit or packet ones based on the used transport. Typical circuit-fashioned networks for high capacity traffic make use of: PDH, SDH, SONET, OTN, DWDM, or the like physical layers; while examples of packet networks are: ATM, Ethernet, Token Ring, IP,MPLS etc. Circuit and packet transports show very different characteristics to each other: the first is distinguished by a fixed connection which stands up for all the call duration with constant dedicated bandwidth assignment, while the second is connectionless or even connection-oriented, but the available bandwidth is shared between more users according to a (fair) scheduling criterion. Despite the underlined differences, suboptimum uses of the two types of networks have been largely implemented in the course of the years to the aim of using a network for transmitting signals best suitable to be transmitted on the other type of transport. A first example is packet data transmitted via modem over a circuit connection. A second example is a streaming signal transmitted over a packet transport, e.g.: ATM AAL1 used for circuit emulation, or Voice over IP.

The two approaches are now considered on the light of continuously increasing service demand to the operators, either incumbent or new coming ones. Incumbent operators with a large basis of installed SDH equipments are evolving toward a so called MSPP based solution which integrates into a traditional SDH node (ADM) those new functionalities identified as NG-SDH and comprising VCat, GFP, and LCAS, which allow more effective and flexible transportation of Ethernet based services like: Ethernet Private Line, Ethernet Private LAN, etc. This approach, usually identified as EoSDH is characterized by a compromise between the exploitation of the already deployed infrastructure and a less optimized packet-oriented service implementation.

As opposite to the Incumbent approach, new coming operators, or operators with less installed legacy-SDH base are attracted by the idea of adopting a solution based on a pure packet approach. In this case, the network is optimized for the packet and whenever a circuit or a TDM service is required, solution is offered throughout CES or ToCES. Circuit emulation approach is quite a complex function and requires a certain amount of sophisticated and expensive circuitry/algorithms (see [MEFD00029]) which need to be realized for adapting a time continuous TDM (PDH or SDH) signal to be transmitted over a packet switched network. Furthermore, this solution is quite new, not yet completely standardized, very preliminary devices with very limited capacity and from small new companies have until now been offered. Very limited verification in real network application has been until now conducted and therefore cannot be considered a trustable solution yet. Another consideration we can make is that circuit emulation, requiring the conversion of the TDM signal in a packet format and vice versa, is certainly more expensive respect to the case of remaining in a circuit switched context, and if it can be acceptable when the number of TDM interfaces is very small, it becomes extremely inconvenient as soon as this number is comparable with the number of interfaces carrying packets.

In conclusion, the proposed solutions for the two types of suboptimal scenarios are not completely satisfactory because the network performances are not guaranteed and standards are only in a preliminary/draft state. Nowadays a platform able to combine the characteristics of an SDH (or similar) network element for circuit / TDM transport and the pure packet approach for the new Ethemet/IP services, would be ideal. In this case operators would adopt a single network element and could tuned its configuration, toward packet or circuit, according to their specific needs or the specific network context application.

### BACKGROUND ART

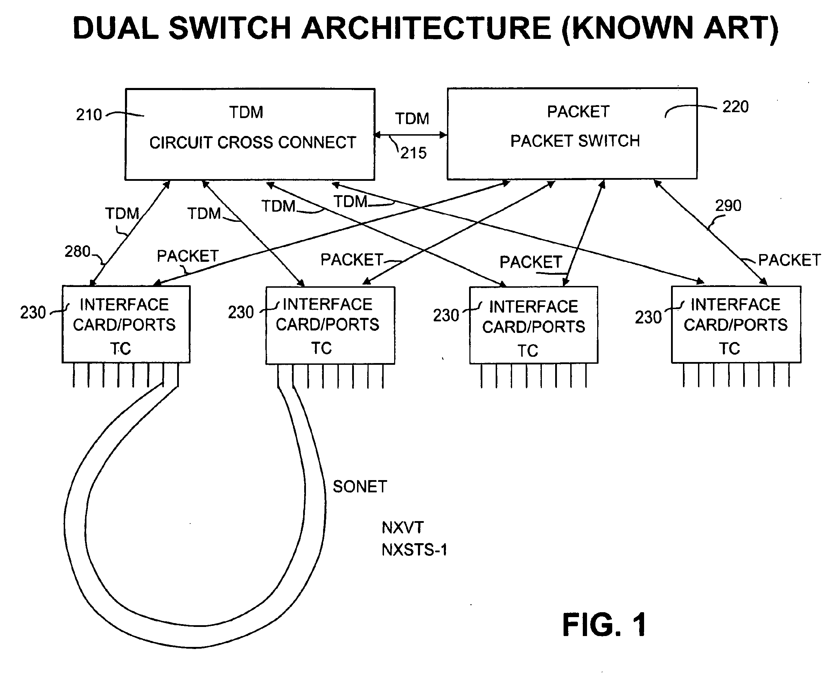

A serious approach to the desired network element is disclosed in the International Patent Application WO200217580-A1. titled: "DUAL SWITCH ARCHITECTURE FOR MIXED PACKET AND CIRCUIT TRANSPORTS OVER SONET AND SDH AND DWDM". With reference to **fig.1**, a dual switch architecture for mixed packet and circuit transports over SONET and SDH and DWDM is provided. The dual switch architecture includes: a TDM circuit cross connect module (210), a packet switch module (220), interface modules (230) with one or more ports, a bi-directional TDM bus (215) between the TDM circuit cross connect module (210) and the packet switch module (220), a point-to-point bi-directional TDM connection (280) between each interface module (230) and the TDM circuit cross connect module (210), and a point-to-point bi-directional packet connection (290) between each interface module (230) and the packet switch module (220). Every port can be either packet or circuit interface. Every interface card has connections to both cross-connect block and the packet switch block simultaneously. The architecture is defined to add/drop mixed circuit/packet traffic from/to local ports to/from SONET ring. Virtual concatenation is provided in the node for creating a logical connection by combining multiple n STS-1 or VT, which can be contiguous or not, into a single connection NxSTS-1 or NxVT, respectively, in order to support a flexible adaptation of the SONET/SDH bandwidth to the throughput required from the packet traffic. Similar concepts are applied to concatenate the AU-n into NxAU-n in SDH. In case of circuit connections, the data is fed to the cross-connection block directly through the (280) lines. The cross-connect card performs circuit cross-connect and route the circuit to the trunk card for SONET ring. The trunk card is itself one of interface cards. In case of packet connections, the packet is buffered at the interface card and sent to the packet switch block through the (290) line. The packet switch (220) then performs all the packet switching to route each packet to its destination either to line (290) towards another interface card or to the internal TDM bus (215) towards the cross-connect (210) to be treated as a circuit connection. A logical circuit connection is setup as a label switch path LSP on the ring to carry a forward equivalent class of MPLS packets [RFC3036]. In this way, all packets from the interface ports on a node element can be aggregated into the same LSP as long as they share the same destination and CoS. In addition, the MPLS LDP protocol [RFC3031] with bandwidth reservation capability can be used to dynamically increase/decrease/setup/tear down the virtual concatenated LSP according to the actual traffic need.

European patent application EP-A-1255385**,** titled: "Signal processing system and hybrid switching" discloses a switch for switching time division multiplexed (TDM) data and packet from input ports to output ports, comprising:
- a plurality of input ports receiving data, wherein each data comprises either TDM data or packet data;
- a plurality of output ports transmitting switched data; and
- a shared memory coupling said input ports to said output ports, said shared memory sequentially receiving the data from said input ports, said shared memory switching a sequentially received data from a respective input port to a respective output port, wherein switching of packet data by said shared memory has no latency or jitter effect on switching of TDM data by said shared memory.

This approach is inadmissible at the higher bitrates of SDH/SONET because of the impossibility to find commercial memory devices with access times so fast as the requested ones (tenth of picoseconds). Besides, the shared memory is physically accessed on timeslot basis but data can be logically routed as Data Exchange Units (DEU) of fixed length. ATM cells of fixed length constitute the exemplary embodiment of DEUs. Long packets are segmented into more ATM cells, each one with its own header. The fixed length of switched DEU is another disadvantage as the available band for payload is reduced by the repeated overhead.

European patent application EP-A-0456947, titled: "Hybrid switching for a communication node" discloses a hybrid packet and circuit switching system that allows merging packet and circuit traffics from user interface modules 2-1 to 2-N on TDM busses 4-1 to 4N, and transferring packet information from one module to another or exchange circuit information between modules. Circuit-type information exchanges or packet transfers are performed synchronously on the TDM busses in bursts of period T comprising a fixed number of bytes. Bursts are switched by the hybrid switch. There is a routing indication common to packet and circuit-type bursts for controlling the switching of bursts by the hybrid switch. The routing indication is given by piggy backing the target module address for the circuit-type bursts as well as for packet data bursts. The marking tables which are needed for the circuit-type burst allocation are located in the user interface modules.

The main drawback of this approach is the rigidity of TDM bus which must be structured exactly the same for both circuit and packet type routed information. This obliges to find a burst size which fits well both to the circuit and to the packet type information. This could cost inefficiency in a modern transport network where packet size could be of the order of few tens bytes (shortest Ethernet frame is of 64 bytes) and circuit virtual containers of the order of thousands bytes (VC4-nV is about of Nx1 kbytes). Segmentation and reassembly are used. Another limitation is that the hybrid switch operates on the basis of control information exchanged with the User Interface Modules on a control bus separate from the TDM data busses, so increasing the signalling requirements. In the last, piggybacking the target module address for the circuit bursts involves a further reduction of useful band for payload.

European patent application EP-A-0528206**,** discloses a Hybrid coupling block with synchronous coupling element (CS) and an asynchronous coupling element (PS) which divides frames into subframes and connects transmission path when packet to be connected is detected. Shorted sub-frames with sub-packets are formed from the original frames. As soon as a synchronous packet to be exchanged is recognised in the sub-packets, predetermined time slots for the period of this packet are reserved for info from that packet and are allowed through via the synchronous coupling element (CS). To signalise the synchronous switching-through, a control line (SL) is used between a demultiplexer (DM) at the input and the synchronous coupling element (CS) and also between the synchronous coupling element (CS) and a multiplexer (M) at the output. A control unit (S) is connected to both the synchronous and the asynchronous coupling elements (CS, PS); Connections can be synchronously switched through, with shorter transfer rate so there is no redundancy in transmission capacity. ATM cells of fixed length together with STM (SDH) constitutes the exemplary embodiment of the hybrid coupling block. Except for the absence of a shared memory, the EP-A-0528206 adds up some drawbacks of both EP-A-1255385 (ATM cells) and EP-A-0456947 (segmentation into sub-packets which fits well both to the circuit and to the packet type information; additional signalling SL crossing the CS element on a separate line).

### OUTLINED TECHNICAL PROBLEM

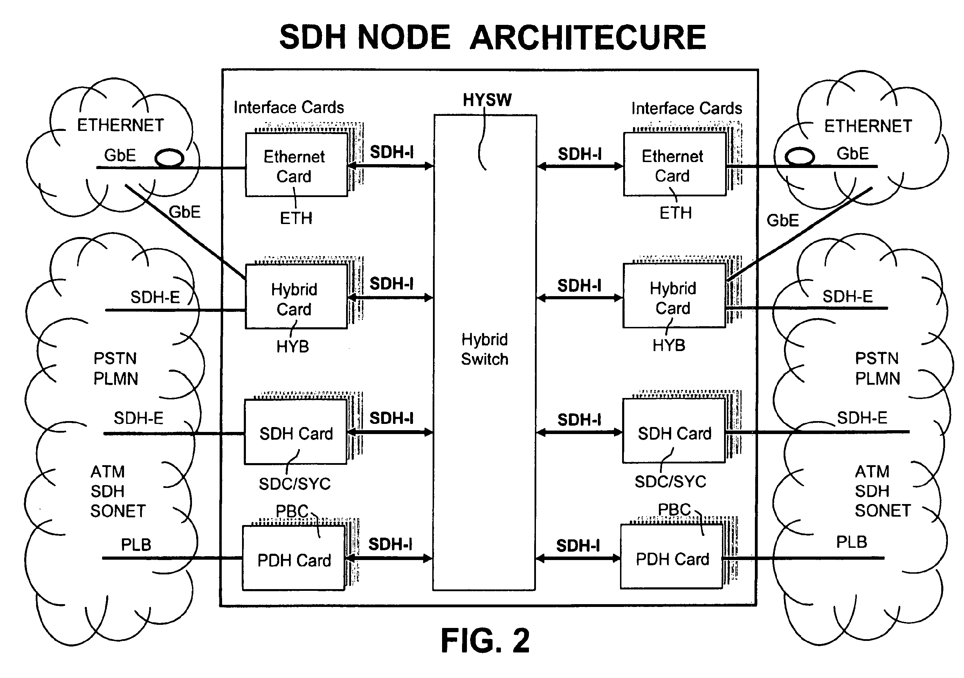

A very critical problem limiting the growth of the SDH apparatuses towards higher STM-N applications is the difficulty to implement a high speed serial bus on the backplane. To overcome this difficulty some former solutions proposed for demultiplexing the incoming STM-N into M signals transmitted on M serial buses with lower bitrate on the backplane, then switching the VC-N acting on the columns of the SDH matrix , and re-multiplexing the columns at the end. This is a clear sign of the difficulties inherent in the backplane. Another drawback affecting signals travelling on the backplane is the cross-talk noise induced by the adjacent lines. A good design for SDH apparatuses should make use of an unique high speed bus on the backplane avoiding as far as possible duplications. In this optic, the design of backplane interconnections is not optimized in the dual switch architecture of the nearest prior art. In fact, from the sole fig.2, the only inferable implementation is that the backplane interconnection between each interface cards unit and the two centralized devices for packet and circuit transports is duplicated, namely: one link set provides the transport of packet based traffic, another link set provides to transport circuit based traffic. The following drawbacks are highlighted for the nearest prior art:
- The overall number of interfaces to the buses of the two centralized devices is doubled in respect of a solution based on a unique high speed bus.
- A certain degree of circuit emulation is maintained and another TDM bus is used for this purpose. In a fully configurable architecture, this interface has to provide the full ring capacity in order to cover the case of packet traffic only. On the other hand, this interface is completely wasted when the traffic is only of the circuit typology.
- Because of duplication the link set that provides transport of packet based traffic constitutes a source of cross-talk noise for the TDM bus used for circuit transports, and vice versa.

Furthermore, the splitting of the incoming SONET ring into a TDM bus and a separated packet bus is a solution that might obstacle the future standardization of the interface cards.

Considering the hybrid switches disclosed in the cited documents of prior art, except some generic statements on the possible use of SDH for transporting TDM data, there is not a clear proposal of a hybrid switch based on the SDH (or equivalent) architecture able to switch both circuit type signal and variable-length packet type information at the highest bitrates of tens or hundreds Gbit/s.

### OBJECT OF THE INVENTION

The object of the present invention is that to overcome the limitations of the prior art and to indicate an integrated approach based on a unique high speed serial bus running on the backplane between the interface cards and a dual centralized device capable of switching packets and circuits transport signals inside a network node.

### SUMMARY AND ADVANTAGES OF THE INVENTION

The invention achieves said object by providing a network node, as disclosed in claim 1. According to the invention, the network node includes bidirectional interfaces having first ports for ingress/egress of circuit and/or packet based traffic and second ports connected to a hybrid switch capable of routing mixed packet and circuit based traffic trough the node and hence also termed Hybrid Switch. The connection between the second ports and the Hybrid Switch is carried out by a SDH bus on the backplane which transports said mixed circuit and packet based traffic. Considering the invention more in details, different topologies of bidirectional interfaces are foreseen.

In an exemplar case an input interface for incoming mixed packet and circuit based traffic is a card connected both to a packet network (e.g. Ethernet) and to a SDH network. The interface circuitry connected to the SDH network synchronizes the incoming STM-N flux with the apparatus clock, aligns the VCs to a fixed position and forwards to a combiner the VCs containing only circuit based traffic to be combined with the VCs conveying only packet traffic (a single VC-4-n). The interface circuitry connected to the packet network, for each packet entering the node generates, from the combination of the MAC source and destination address, a VLAN-ID identifier which identifies the logical link inside the node and maps it onto a biunique CID identifier which is used by the hybrid switch to forward the packet towards the egress interface card. GFP frames of variable length are built up appositely for transporting packets inside the hybrid switch. Operatively, the packet associated to the VLAN-ID is encapsulated (after having extracted the VLAN-ID) into the payload of a GFP frame, whose Extension header includes the mapped CID identifier. The VLAN-ID has been extracted from the pre-embedded packet because its permanence in the payload would reduce the throughput of the hybrid switch, and hence of the node. The GFP frames so arranged are embedded into VCs directed to the combiner to be combined with the VCs containing circuit based traffic into a common STM-N leaving the interface on the SDH bus on the backplane directed to the Hybrid Switch.

The Hybrid Switch architecture is constituted by a centralized part and m replicated parts (hereafter called channels) as the m incoming STM-N flows. The centralized part is devoted to timing generation, mixed traffic routing control, and packet scheduling. Channels and centralized parts are illustrated with the following synthetic disclosure of the Hybrid Switch, which includes:
- a front-end circuitry for recovering data incoming from each STM-N flow on the SDH bus on the backplane, separating the two typologies of traffic, and sending bytes of the VCs that carry GFP frames to a set of m m-input-one-output (packet) switches, and bytes of the VCs which have to be switched as such to a set of m m-input-one-output (circuit) switches;
- a packet framer dedicated to the portion VCs within each STM-N incoming signal carrying GFP frames, to perform a GFP frame delineation in order to establish the begin of each GFP frame, hence CID identifier and frame length values retrieval from the GFP header;
- a memory to store routing tables indicating the destination ports mapped both to all foreseen CID identifiers and the incoming circuit based VCs of the m channels;
- a centralized routing controller which accesses first routing tables using the CID identifiers provided by the m packet switches to get address of the mapped output port and generate in correspondence control signals towards the m packet switches for the selection of the addressed output port, and which accesses second routing tables to read the address of the output port of each VC conveying circuit based traffic at the inputs of the m circuit switches and generate in correspondence control signals to the selection of said output ports;
- m time-switches (multiplexer) each receiving bytes from the outputs of both packet and circuit switches of a respective channel, in order to output either the first or the second type of traffic bytes upon a control signal from the centralized control;
- m STM-N formers cascaded to the m time-switches and in their turn followed by m serializers which provide the STM-N flows of the SDH bus on the backplane directed to the output interfaces.

The output interface, dual in respect of the input one, is connected to the SDH bus on the backplane for receiving the STM-N flow from the Hybrid Switch and operate on the VC pointers in a way to align the VCs to a fixed frame position to be sent so aligned to a splitter. The latter subdivides VCs of the two type of traffic and forwards them along two different paths. The VCs concerning circuit based traffic are forwarded to an STM-N former of the flow on the SDH bus towards the external SDH network. The VCs which conveys GFP frames are instead subjected to the delineation procedure to establish the begin of said frames. Then for each GFP frame packet is de-encapsulated from the payload of the GFP frame, the CID identifier is retrieved from the header and remapped onto the VLAN-ID identifier, and the latter is reinserted into the packet. Packets so obtained leave the node towards the packet network (e.g. Ethernet).

Respect to the dual switch architecture disclosed in WO200217580-A1, the hybrid solution proposed by the invention has the following advantages:
- the simplification of the backplane structure allows a better utilization of the centralized resources and prevents cross-talk noise, otherwise introduced by the duplicated link set for different traffic typology.
- The overall number of interfaces to the buses of the centralized devices (circuit cross connect and packet switch) is halved.
- The adoption of an unique bus for both signal typologies not only reduces the number of bus interfaces but allows also some other circuitry optimization: frame aligner, memory banks, controller, etc.
- Interface cards with mixed traffic can be served with a single bus instead of two distinguished ones.
- The packet switch emulation to/from circuit cross connect interface is prevented.

A peculiarity of the present invention is that the interface cards used in the network node see both the packet switch and the circuit transport switch under an unique standard interface, namely the SDH bus. With that, a uniform design of the interfaces is made possible, paving the way for a future standardization.

Lastly, although SDH is explicitly mentioned to qualify the node which is the subject of the present invention, it shall be understood that other transport technologies having characteristics similar to SDH, such as SONET and OTN, are suitable to be used in the node of the invention.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1**, already described, shows the general diagram of a dual switch architecture for mixed packet and circuit transports on SONET/SDH according to the known art;
- **fig.2** shows the general architecture of a network node for routing mixed packet and circuit transports according to the present invention;
- **fig.3** shows a detail of an Ethernet interface card inside the node of fig.2;
- **fig.4** shows the GFP framing structure used to encapsulate packets into a virtual container routed by a hybrid switch device inside the node of fig.2;
- **fig.5** shows in detail a GFP frame;
- **figures 6** and **7** show two functional schematisations of two types of hybrid interface cards inside the node of fig.2, each combining packet and circuit transports;
- **fig.8** shows some logical connections for the GFP frames inside the node of fig.2;
- **fig.9** shows the functional architecture of the hybrid switch device inside the node of fig.2.

### DETAILED DESCRIPTION OF AN EMBODIMENT OF THE INVENTION

As a description rule, in the several figures of the drawings like referenced numerals identify like elements. With reference to **fig.2**, we see a possible network node including a central Hybrid Switch HYSW connected to various types of interface cards through bidirectional SDH buses labelled SDH-I wired on the backplane structure. In a practical embodiment an STM-16 stream is transported on the SDH-I bus whose payload structure depends on the granularity we want to provide within the node using different Virtual Containers: VC12, VC3, VC4. The number of SDH-I buses connecting the card interface to the HYSW depends on the bandwidth the card processes. The virtual containers can also be of the concatenated format, as described in Ref. [ITUG707]; according to the line card they are connected to, they can transport a continuous signal, or a packet based signal, or a combination of the two. As there are some cards which can manage packet traffic and SDH traffic at the same time, the SDH-I bus could carry both packet traffic and SDH traffic at the same time. Therefore each SDH-I bus can carry either SDH traffic or packet traffic or mixed traffic, it depends on the line card. Anyway if SDH-I carries packet traffic, there is only one group (VC-4-Xv) which carries all packet traffic.

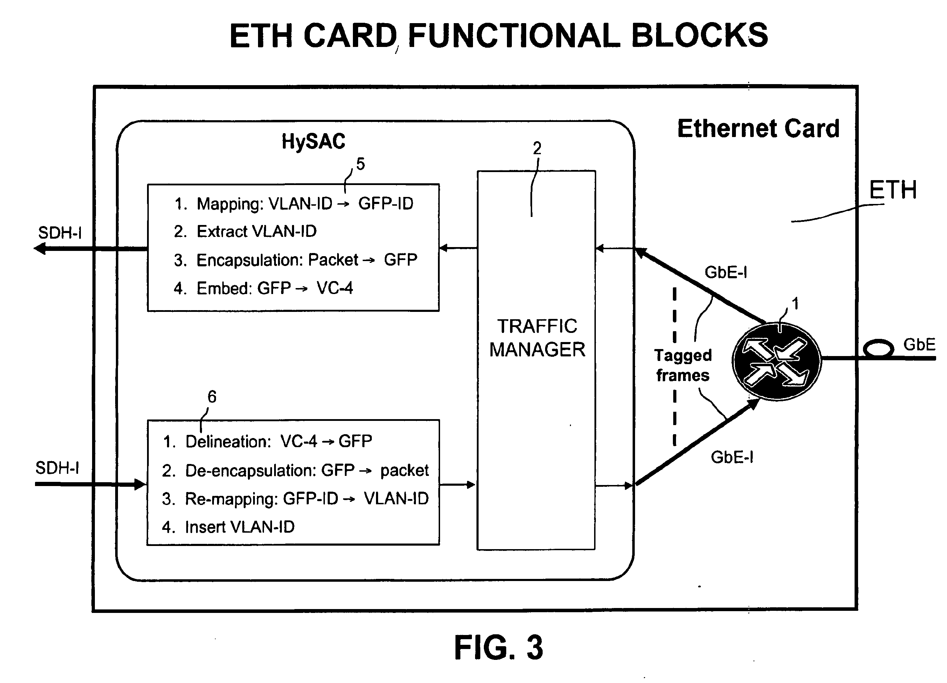

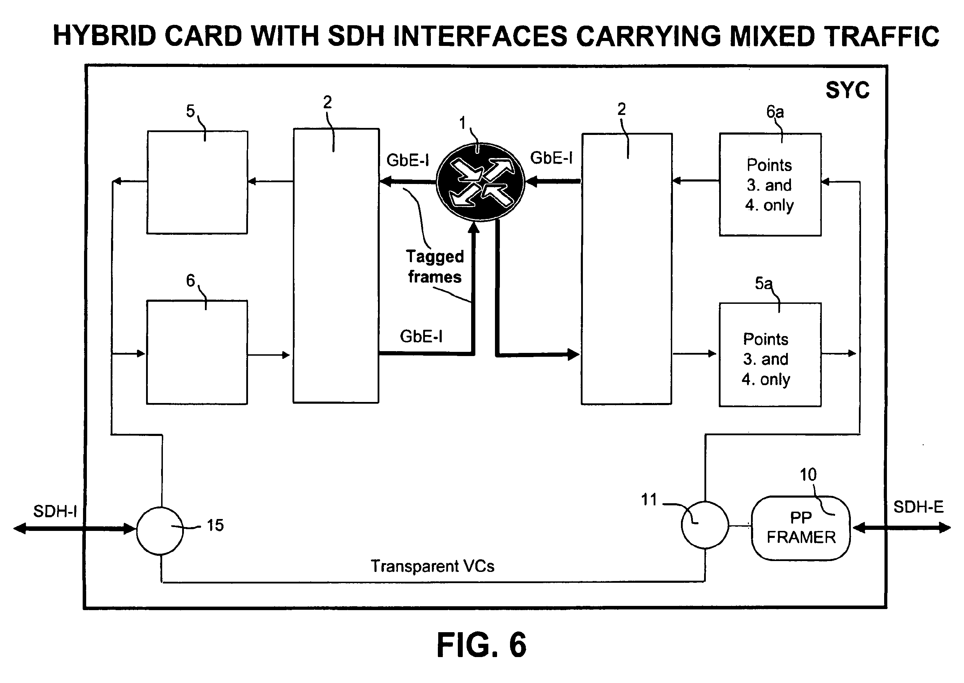

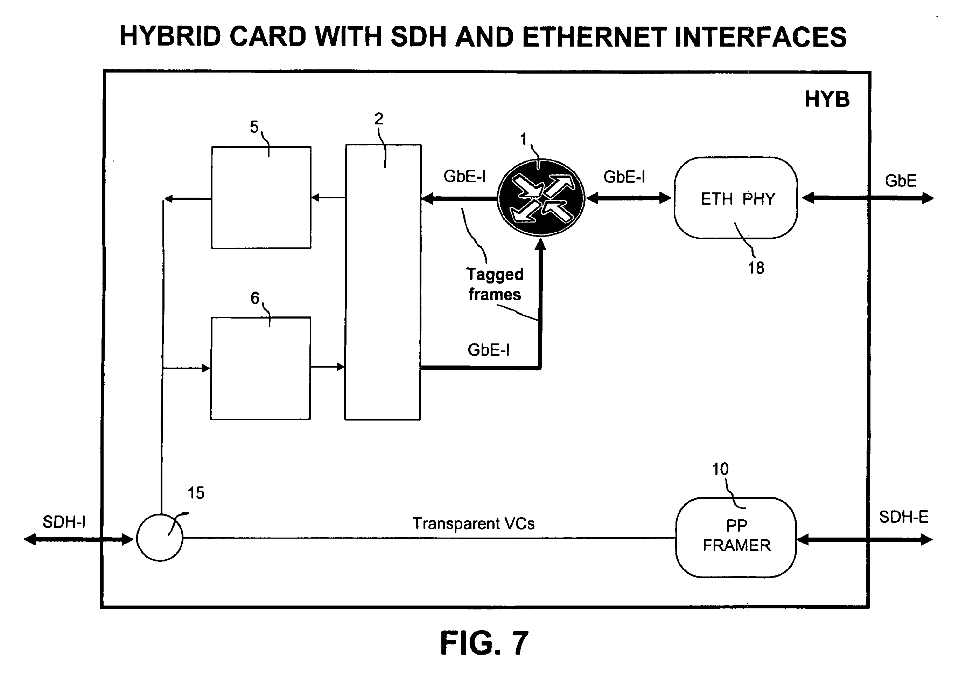

The interface cards are further connected to other networks through external buses. Different typologies of cards are equipped:
- A first type of interface cards is constituted by Ethernet Cards ETH providing any combination of all the standardized Ethernet interface: 10Mbit, 100Mbit,1 Gbit, 10Gbit, in different flavour (electric, optical,..). The Ethernet Cards ETH are connected to an external GbE interface. The SDH-I streams originated/terminated on Ethernet cards carry VCs transporting GFP frames which shall be switched in the packet switched section of the hybrid switch HYSW. The Ethernet traffic is first encapsulated onto GFP frames and then mapped on VC-4-Xv pipes (X is the concatenation multiplier programmable by operator). Lower granularity such as VC12 or VC3 requires only larger processing capabilities. This type of cards will be described with the illustration of **fig.3**.
- A second type of interface cards is constituted by SDH cards SYC connected to one out of a plurality of possible networks by means of an external SDH interface, labelled SDH-E. The SDH-E bus can be variously implemented either for electrical, optical, or radio signals. These SDH cards can manage different types of traffic depending on the connected networks, for example: pure circuit transport signals, packet over SDH (Ethernet packets, ATM cells, Frame Relay,...), or mixed packets and circuit transport signals. Inasmuch the two types of traffic coexist, we intend these cards are hybrid cards. The SDH-I streams originated/terminated on the hybrid cards carry both VCs transporting GFP frames mapping packets which shall be switched in the packet switched fashion and VCs transporting continuous signals which shall be switched in the circuit switched fashion. This type of cards will be described with the illustration of **fig.6**.
- A third type of interface cards is constituted by Hybrid Cards HYB providing the SDH-E interface both for Ethernet packets and SDH circuit transport signals. The SDH-I streams originated/terminated on these cards carry both VCs transporting GFP frames mapping packets which shall be switched in the packet switched fashion and VCs transporting continuous signals which shall be switched in the circuit switched fashion. This type of cards will be described with the illustration of **fig.7**.
- A fourth type of interface cards is constituted by SDH cards SDC connected to the network through the SDH-E bus carrying only circuit transport signals. The SDH-I streams originated/terminated on these cards carry VCs transporting continuous signals which shall be switched in the circuit switched fashion. Their structure doesn't contain any element of novelty or originality in respect to standard card currently developed in any SDH equipment.
- A fifth type of interface cards is constituted by Plesiochronous PDH cards PBC providing plesiochronous interfaces towards the network and carrying only circuit transport signals, see [ITUG703]. Also for the PDH cards there could be hybrid version, of the same type described above, but for simplicity they will not be described in details, the same consideration applying as for the SDH/Eth combination. The SDH-I streams originated/terminated on these cards carry VCs transporting continuous signals which shall be switched in the circuit switched fashion. Their structure doesn't contain any element of novelty or originality in respect to standard card currently developed in any SDH equipment.

The HYSW hybrid switch can be used with different topologies of optical transport networks, e.g.: self-healing ring, star, mesh, or mixed architectures. The HYSW is protected by redundancy path and APS hitless devices (not shown) and is remotely controlled at the Q interface of a TMN network which exploits control channels built up on some dedicated bytes of the SOH.

By a rapid glance to the **fig.2**, it can be immediately realized that a unique serial bus SDH-I on the backplane carrying mixed packet and circuit based traffic is ideally prolonged at the two sides of the hybrid switch HYSW, differently from the cited prior art where duplication is needed.

Without limitation, the only Ethernet network is considered hereafter as example of packet networks served by the network node; it is understood that all the considerations concerning this network are valid for other packet interface typologies :i.e. MPLS. An Ethernet card ETH is detailed in **fig.3**. With reference to the figure and [IEEE802.3], the ETH card includes an Ethernet Switch 1 (level-2 switch) connected to the external GbE interface(s) and to a certain number of internal connections GbE-I connected to a block named HySAC, which implements all the functionalities of the cards including interfacing with the SDH-I bus. In the simplified figure the following blocks/devices are not shown: electro-optical transducers, apparatus clock recovery circuits, local ETH ports, MAC terminations, and a RAM external to the HySAC block for buffering function. The HySAC block includes two cascaded blocks 2 and 5 on the direction from the input ports (not shown) to the Hybrid Switch HYSW, and other two cascaded blocks 6 and still 2 on the opposite direction.

In operations, each GbE traffic interface carries Ethernet frames belonging to one or more ETH logical connections. The Ethernet Switch 1 for each packet entering the node generates, from the combination of the MAC source and destination address (SA, DA), a VLAN-ID identifier which identifies the logical link inside the node; the VLAN-ID will then be mapped onto a biunique identifier which will be placed in the CID field of a GFP frame. VLAN-ID is also named Tag in the description to mark the Ethernet packets as Tagged frames. As already said, the Ethernet packets can be encapsulated in the payload of GFP frames and then mapped into SDH frames. Considering that the GFP frames coming from different ingress ports can be directed towards the same output port, some scheduling/queuing must be implemented to have fairness in accessing the shared bandwidth. Block 2 is a Traffic Manager performing on the incoming Ethernet frames from the GbE-I interface all those known functions (e.g.: policing, queuing, and rate shaping) they are needed to accept, regulate, and bufferize the traffic to be switched inside the node. Block 2 also performs similar functions on the Ethernet frames sent on the GbE-I interface for leaving the node.

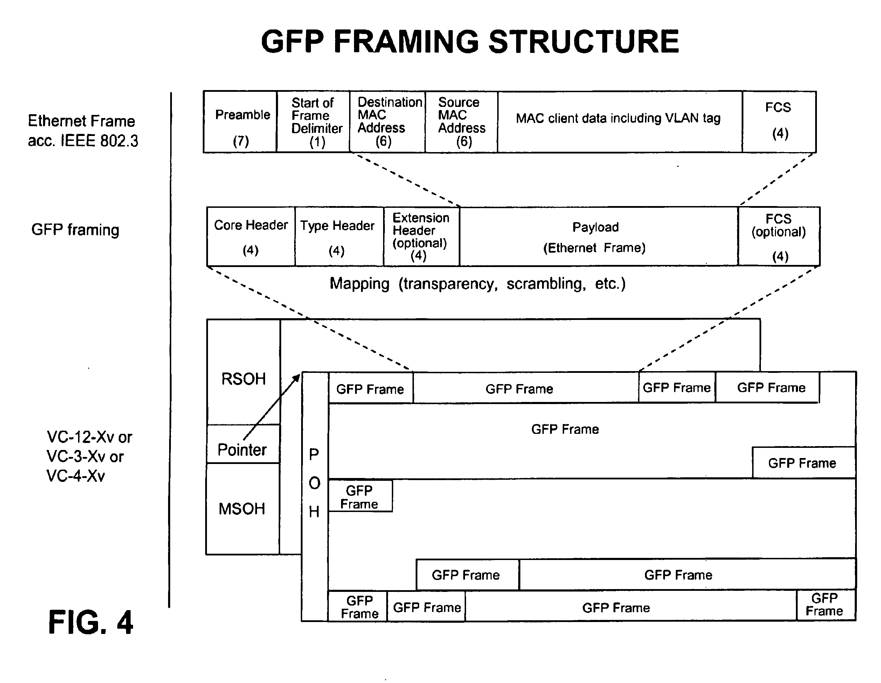

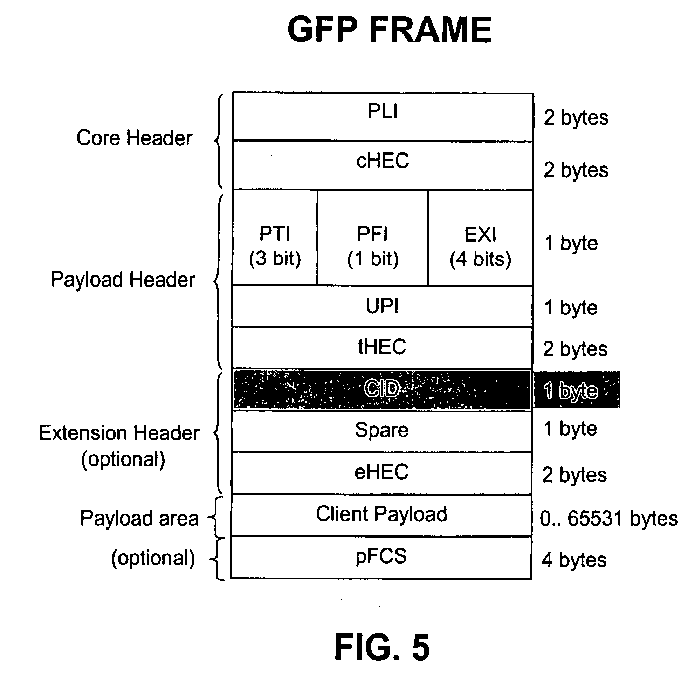

Block 5 implements the teaching of [ITUG7041] highlighted in the **figures 4** and **5**. An Ethernet frame according to [IEEE802.3] is depicted on the top of figure **fig.4**. This frame includes the VLAN Tags (VLAN_ID) in the payload. The VLAN tags are associated to logical connections through the node; this is obtained associating each VLAN_ID to a GFP_lDx, to say, the CID field included in the Extension Header of the GFP frame represented in **fig.5**. The implementation of a logical connection is based on the following associations:
- <VLAN_IDa, GFP_lDx> on one interface card,
- <VLAN_IDb, GFP_ IDx> on the other interface card.

The VLAN_IDa could be different from VLAN_IDb, but the CID value must be the same and must be the unique in the Hybrid Switch configuration. The VLAN_ID is only valid between Ethernet Switch and HySAC block, it is not carried on the GFP frame. Based on VLAN_ID, block 5 of the HySAC controller identifies the GFP_IDx and writes the corresponding value in the CID field of the Extension header of the GFP frame, then it extracts the VLAN-ID from the Ethernet frame. Block 5 completes the mapping of all the GFP frames onto the portion of the STM-N frame (concatenated VCs) which is then sent on the outgoing SDH-I bus. As depicted in **fig.4**, the GFP frames are then mapped into the assigned VCs by means of the delineation function realized with the PLI as described in [ITUG7041]. For better clarification, the Ethernet frames are interpreted with the help of the field SFD which indicates the beginning of a new frame. Gaps between successive frames are filled up with the preamble. The GFP frames are interpreted with the help of the core header field PLI+ associated to the correction code. The PLI contains information on the frame length. Gaps between successive frames are filled up with core header of frames with null length. Accordingly the receiver checks for a frame constituted by a sole core header and once it is detected the remaining frames are also correctly detected consequently. Mapping between the output ports and CID values is configurable by software.
The GFP frame is shown in **fig.5**, where the various acronyms used to indicate the various fields have the following meaning: PLI (Payload Length Identifier), cHEC (Core Header Error Control), PTI (Payload Type Identifier), PFI (Payload FCS Indicator), EXI (Extension Header Identifier), UPI (User Payload Identifier), tHEC (Type Header Error Control), CID (Channel ID), eHEC (Extension Header Error Control), pFCS (Payload Frame Check Sequence). Turning back to **fig.3**, block 6 performs the opposite operations than block 5. More precisely, it receives the SDH frames from the incoming SDH-I bus, extracts the VC-4 containers, de-maps the GFP frames by delineation and for each GFP frame: reads the CID field from the extension header, retrieves the VLAN-ID associated to the CID value, by re-mapping, and inserts the VLAN-ID into the payload of the de-encapsulated GFP frame obtaining an Ethernet frame to be completed with frame delimiter and preamble. The incomplete Ethernet frames are forwarded again to block 2 to perform the aforementioned traffic management functions for a correct subdivision of packets received by an unique source to many GbE-I links.

With reference to **fig.6**, the hybrid card SYC which corresponds to the second type of interface cards is diagrammatically represented. The SYC card represents the case where the traffic interface is SDH and the traffic carried on the SDH-E bus consists either of Virtual Containers which have to be transmitted from the ingress to the egress of the card in this format, or Virtual Containers transporting GFP frames which on their turn contain packets (i.e. Ethernet frames). The hybrid card SYC includes a PP (Pointer Processing) Framer block 10, two splitters/combiners 11, 15 and other blocks similar to the ones of **fig.3**. To simplify the drawing block 2 is split in two parts at the two sides of the Ethernet Switch 1. The splitters/combiners 11 and 15 are bidirectional three-port devices. The PP Framer 10 is connected to the SDH-E bus and to a first port of the splitter/combiner 11. The SDH-I bus is connected to a first port of the splitter/combiner 15, while a second bidirectional port of both splitters/combiners 11 and 15 are connected together. The third port of the splitter/combiner 11 is connected to the cascade of blocks 6a, 2, 1, 2 again, 5, and the third port of the splitter/combiner 15. The third port of the splitter/combiner 15 is also connected to the cascade of blocks 6, 2, 1, 2 again, 5a, and the third port of the splitter/combiner 11. Blocks 6a and 5a differ form the corresponding blocks 6 and 5 of **fig.3** by the fact that the only functions indicated with 3. and 4. are performed.

In operation, the SDH-E bus is directed to the PP Framer block 10 which intercepts the VCx pointer in the received SDH frame and repositions the VC in a new frame, with apparatus clock and the VCx pointer in a known and fixed position of the frame (VCx = 0). The splitter 11 conveys the VCs including signals which have to be switched in the circuit fashion directly towards the combiner 15, where they will be added to the VCs coming from the packet processing and inserted in the SDH-I signal with the pointers in their former positions. The others VCs containing packets, nominally transporting GFP frames on the SDH network, are diverted towards the block 6 where the original Ethernet frames are extracted from the GFP frames and addressed to the Traffic Manager 2, which regulates the access to the Ethernet Switch 1 on the internal connection GbE-I. Packets at the output of the Ethernet Switch 1 on the GbE-I connection are directed again to the Traffic Manager 2 which also regulates the access on the SDH-I bus. Block 2 forwards the received packets to block 5 to be encapsulated into GFP frames and sent to the third port of the combiner 15. In the reverse direction from bus SDH-I to SDH-E reverse operations are carried out by the splitter 15 and the combiner 11.

With reference to **fig.7**, the hybrid card HYB corresponding to the third type of interface cards is diagrammatically represented. The HYB cards represent the case where Ethernet interfaces and SDH interfaces coexist on the same card. In this case, the SDH-E bus carries only traffic which has to be handled in the circuit format, and the GbE interface carries packets. The hybrid card HYB includes a PP Framer block 10, a splitter/combiner 15, an ETH PHY card 18, and other blocks similar to the ones of **fig.3**. The splitter/combiner 15 is a bidirectional three-port device. The PP Framer 10 is connected to the SDH-E bus and to a first port of the splitter/combiner 15. The SDH-I bus is connected to a second port of the splitter/combiner 15, while the third port is connected to the cascade of blocks 6, 2, the Ethernet Switch 1, and the ETH PHY card connected at the GbE interface. In its turn, the ETH PHY card 18 is connected to the cascade of the Ethernet Switch 1, blocks 2, 5, and the third port of the splitter/combiner 15.

In operation, the circuit transport signals embedded in Virtual Containers on the SDH-E bus which have to be transmitted from the ingress to the egress of the card in this format is directed to the PP Framer 10, to be arranged as already said and forwarded to the combiner 15 where they are added to the VCs coming from the packet processing and inserted in the SDH-I signal. In the reverse direction, from bus SDH-I to SDH-E, the splitter 15 conveys the VCs relevant to signals switched in the circuit fashion directly towards the PP Framer 10, which re-establishes the exact pointer locations and inserted them in the SDH-E signal. The others VCs containing packets nominally transported in GFP frames are diverted towards the block 6, where the original Ethernet frames are extracted from the GFP frames and addressed to the Traffic Manager 2, which regulates the access to the Ethernet Switch 1 on the GbE-I connections with the internal GbE-I interface. Packets at the output of the Ethernet Switch 1 on the GbE-I connections are directed to the ETH PHY block 18 to be forwarded on the GbE interface.

Packets incoming at the GbE interface enter the ETH PHY block 18 which carries out the typical physical layer functions and forwards them on the GbE-I connection to the Ethernet Switch 1. Packets at the output of the Ethernet Switch 1 on GbE-I connection are directed to the Traffic Manager 2 which regulates the access to the SDH-I bus. Block 2 forwards the packets to block 5 which encapsulates them into GFP frames and sent the corresponding VCs to the third port of the combiner 15 to be added to the VCs coming from the SDH-E interface.

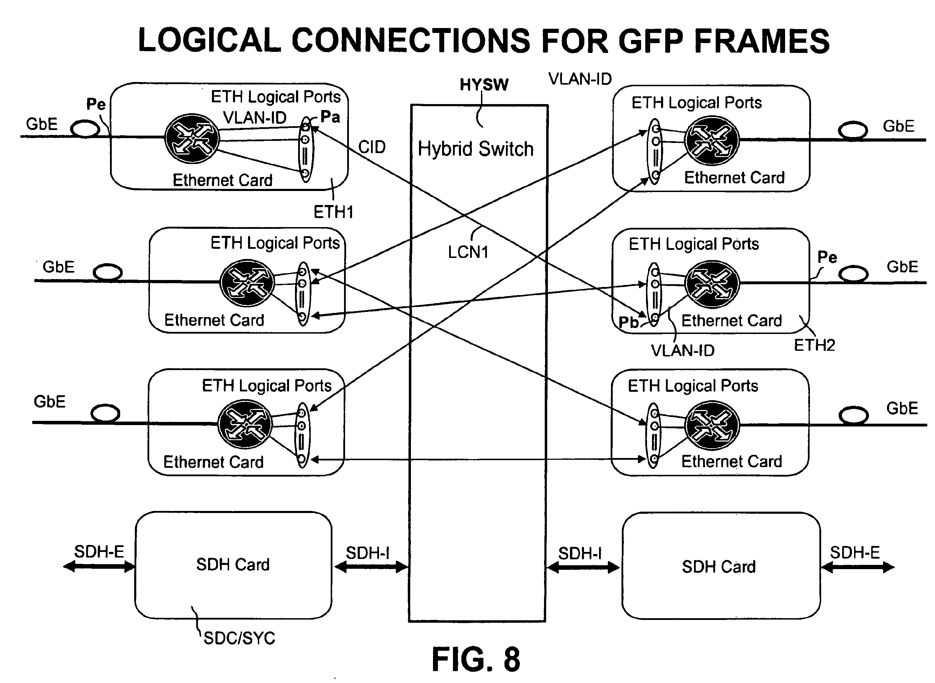

The description of the various typologies of interface cards is completed and the base for understanding the operation of the central Hybrid Switch HYSW is posed. This central switch is a special cross-connect with the twofold capability of routing SDH virtual containers parallelly to GFP frames and hence the Ethernet packets transported in the GFP payload. As show in **fig.2**, such a hybrid cross-connect accepts STM-N flows at the ingresses and outputs STM-N flows at the egresses. An immediate visual representation of the packet routing through the Hybrid Switch is given in **fig.8**, where some logical connections between ETH ports (physical or logical) placed at the two sides of the Hybrid Switch HYSW are drawn. The connections between ETH logical ports are set up on operator's command by configuration setting. From the Switch point of view, the ETH logical ports are managed as typical ETH physical ports. The logical connection setting is similar to a physical (RJ45) connection setting (with different bandwidth of course). More particularly, a logical connection LCN1 inside the node is highlighted between an ETH logical port Pa of the uppermost ETH1 left card and an ETH logical port Pb of the second ranked ETH2 right card. The ETH packets at ingress port Pe of the ETH1 card are identified by the MAC address (SA, DA) combination and switched accordingly within the Ethernet switch from where they emerge with a VLAN-ID which identifies the internal logical path (LCN1 from Pa to Pb) to be traversed in order to reach the egress port. Before crossing the hybrid switch, the tagged frame is encapsulated into a GFP frame where the CID field of the extension header contains the value which identifies the LCN1 path within the hybrid switch. Operatively, the mapping for routing Pa → Pb is performed in two steps: a first step VLAN-ID → CID is carried out by the ETH1 card using a first table; a second mapping step CID→ Pb is carried out by the Hybrid Switch HYSW using a second table (a single table might include the two mappings). The switching scenario is completed by two SDH cards SDC/SYC at the two sides of the Hybrid Switch for switching circuit transport signals embedded on the SDH-I bus. In operation, for each received GFP frame, the Hybrid Switch carries out the delineation procedure described in [ITUG7041] and identifies the output port reading the CID field, then switches the GFP frame to the configured output port rendering physical the logical connection.

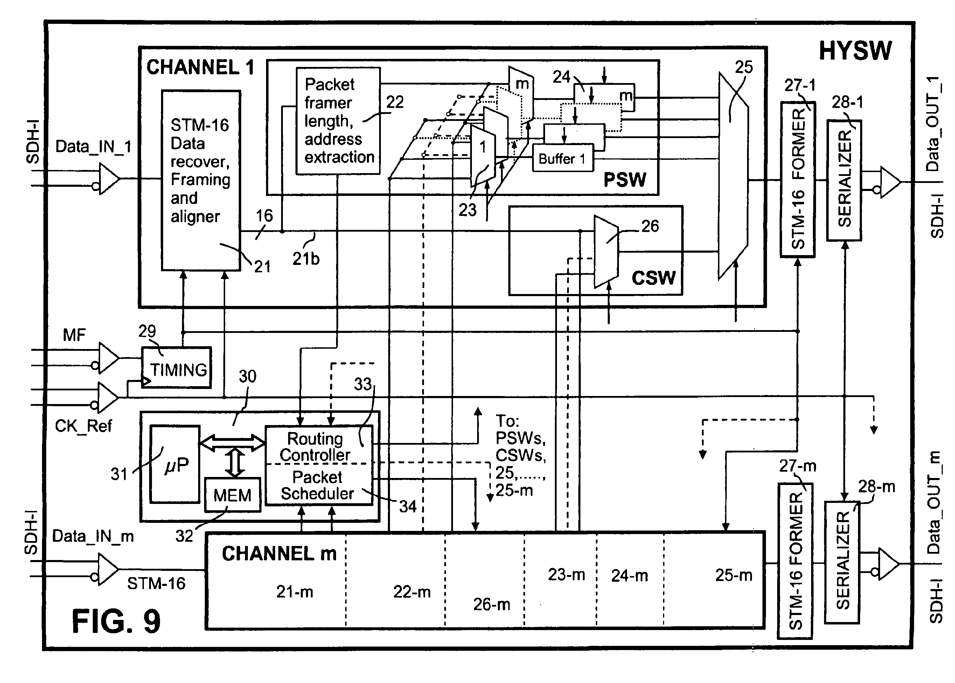

The architecture of the Hybrid Switch is represented in **fig.9** in a general diagrammatical form and for a direction only of the SDH-I bus (the architecture for the other direction is identical). With reference to **fig.9**, the Hybrid Switch HYSW accepts on the SDH-I bus a number m of STM-16 flows at the inputs called Data_IN_1, ....., Data_IN_m, each carrying mixed packet and circuit based traffic in the most general case. The HYSW outputs on the SDH-I bus a number m of STM-16 flows called Data_OUT_1, ....., Data_OUT_m, each carrying mixed packet and circuit based traffic in the most general case. The HYSW switch includes m sub-block channels dedicated to the m incoming/outgoing STM-16 flows, plus a common synchronization circuit 29 and a local processor block 30. Circuit 29 receives a reference clock CK_Ref at 2,488.32 Mbit/s and a MF frame reference pulse at the repetition rate of 125 µs and in its turn generates the timing signals needed to all internal blocks. Each sub-block channel 1,...,m is followed by two cascaded blocks 27-1 and 28-1,.......,27m and 28m corresponding to a STM-16 FORMER and a SERIALIZER connected to an output buffer of Data_OUT_1,..., Data_OUT_m signal on the serial SDH-I bus. The processing block 30 includes a processor 31 having a bidirectional bus connected to a memory 32, a Routing controller 33, and a Packet Scheduler 34 (for drawing simplification the connections of block 30 with the main blocks of HYSW are not shown). For brevity, the only Channel 1 sub-block is represented in detail, the other sub-block channels are identical. Channel 1 includes a front-end block 21 which receives an STM-16 flow Data_IN_1 from an input buffer connected to the SDH-I bus, a timing signal from block 29, and the apparatus clock CK_Ref, generating 2-bytes words sent on an internal bus 21 b directed to a packet switch PSW and a circuit switch CSW. The PSW switch includes a header analyser block 22 connected at the input to the internal bus 21 b and at its output to a first input of m multiplexers 23 in parallel. Block 22 is further connected to the Packet Scheduler 34. The outputs of the m multiplexers 23 are directed to respective buffers 24, in their turn connected to the inputs of a terminal multiplexer 25, whose output is connected to the STM-16 Former 27. The remaining m-1 channels are structured as channel 1, the last m^{th} channel includes the following blocks: 21m, 22m, 23m, 24m, 25m, and 26m in correspondence of the equivalent ones of channel 1. Each m-input multiplexer 23 has the remaining m-1 inputs respectively connected (in parallel to the same inputs of the other nm multiplexers with the same label) to the m-1 blocks equivalent to block 22 inside the other m-1 channels. Similarly, the CSW switch includes an m-input multiplexer whose other m-1 inputs are respectively connected to the m-1 blocks equivalent to block 22 inside the other m-1 channels, and an output connected to an input of the terminal multiplexer 25. The set of multiplexer 23,....,23m see packets entering the m STM-16 channels of the whole node. Similarly, the set of multiplexer 26,....,26m see circuit transport signals entering the m STM-16 channels of the whole node.

In operation, block 21 synchronizes the incoming STM-16 flow and recovers the incoming serial Data_IN_1, disassembles the VCs, aligns them to a fixed position (begin of the frame) to make the switching easier. The aligned VCx is S/P converted in octets (bytes) and the octets of circuit based and packet based VCx are sent on the internal bus 21b (16 wires) towards the respective switch PSW or CSW. At word time the multiplexer 26 is controlled to output one out of m words simultaneously present at the m inputs according to the VCs routing plane (the other inputs are not lost because selected by other multiplexers).

As the packet switching is concerned, the description concentrates on the only VC-4 format (140 Mbit/s), but other VC format can be used is used; a prefixed number n of VC-4 containers are concatenated to increase the switched bandwidth in respect of the single VC-4 so as to match the bandwidth of the GbE interface. Block 22 receives the packet bytes of the GFP frames from the internal bus 21 b and executes the Delineation procedure, as already said. From delineation, the starting point of each GFP frame is determined. Block 22 retrieves the contents of PLI and CID header fields from each GFP frame and sends the read values to the processing block 30. The bytes of delimited frames are sent to a same input of the m multiplexers 23 according to the concatenation procedure. At word time the multiplexer 23 is controlled to output one out of m words simultaneously present at the m x m inputs according to the GFP frame routing plane

At word time the multiplexer 25 is controlled to output either packet or circuit based bytes according to the mixed structure of the STM-16 output flow. With that, multiplexer 25 behaves as a time switch between circuits and packets transport signals. The STM-16 FORMER block 27 receives the sequential bytes at the output of multiplexer 25 and reconstructs in an internal buffer the sequential order assigned to the VCs into the STM-16 output frame. Each VC is completed with the overhead and the pointer which indicates its position on the frame. The reconstructed frame is transferred to the serializer block 28 which reads it at bit rate, obtaining the STM-16 flow of Channel 1 on the SDH-I bus at the output of the hybrid switch HYSW.

The processing block 30 performs the routing function both for packets and circuit based signals. The two set of multiplexers 23,...,23m and 26,...,26m, and the set of terminal multiplexers 25,....,25m constitute a T-S-T hybrid switching matrix completely non-blocking controlled to switch packets and circuit transport data mixed together. In case of congestion at the output interfaces, the congestion status is communicated to the processing block 30 which performs the scheduling of the GFP frames stored in the m buffers internal to PSW according to known scheduling algorithms. The memory 32 stores the needed routing tables that can be updated by remote control. As the circuit based transport is concerned, the incoming VCs are switched as such. Without limitation, three types of Containers are considered by the switch HYSW, namely: VC-4 (140 Mbit/s), VC-3 (34/45 Mbit/s), and VC-12 (2 Mbit/s). In the case of packet switching, instead, the processing block 30 receives the PLI and CID values of each GFP frame and uses the CID value to address the output port in the stored map, and the PLI value to set the duration of the relevant switch. The memory 32 also stores tables including the sequential structure of each STM-16 frame at the output of HYSW. Basing on the stored tables, the routing controller 33 controls each set of multiplexers 23, 26, and 25 at byte time. From the knowledge of the GFP frame length for packet switch and the type of VC for circuit based switch, the routing controller 33 holds the respective control signals unchanged for all relevant duration.

### VARIANTS

A precise obligation doesn't exist at all to the use of STM-16 flows at the inputs and the outputs of the Hybrid Switch, for example, STM-4 or STM-64 are valid choices. Also the architecture of the Hybrid Switch is not unique and some changes may be introduced by those skilled in the art without departing from the scope of the invention. Besides, a certain degree of simplification is possible in the interface cards. For example, a solution more integrated than the intermediate passage from the VLAN-ID, could be obtained mapping the internal connection associated to the couple of MAC addresses (SA, SD) onto the CID field of the GFP extension header directly. The embodiment with the intermediate VLAN-ID is only tied to the use of commercial Ethernet Switch inside the interface cards.

### APPENDIX A - USED ACRONYMS

AALn - ATM Adaptation Layer n
ADM - Add/Drop Multiplexer
APS - Automatic Protection Switching
ATM - Asynchronous Transfer Mode
AU - Administrative Unit
B-ISDN - Broadband Integrated Services Digital Network
CES - Circuit over Packet Emulation
CoS - Class of Service
DCX - Digital Cross-Connect
DWDM - Dense Wavelength Division Multiplex
EoSDH - Ethernet over SDH
FPGA - Field Programmable Gate Arrays
GbE - Gigabit Ethernet
GFP - Generic Framing Procedure
HySAC - Hybrid Switch Access Control.
IP - Internet Protocol
IETF - Internet Engineering Task Force
LAN - Local Area Network
LCAS - Link Capacity Adjustment Scheme
LDP - Label Distribution Protocol
MPLS - Multi Protocol Label Switching
HySAC - Hybrid Switch Access Control
MSPP - Multi Service Provisioning Platform
NG-SDH - New Generation SDH
PDH .- Plesiochronous Digital Hierarchy
PDU - Protocol Data Unit
PLI - Payload Length Identifier
POH - Path Overhead
QoS - Quality of Service
SDH - Synchronous Digital Hierarchy
SFD - Start of Frame Delimiter
SOH - Section Overhead
SONET - Synchronous Optical Network
STM-N - Synchronous Transport Module (level N 1, 4,16, 64,.....) in SDH
STS-N - Synchronous Transport Signal (level N = 1, 3, 12, 24, 48,....) in SONET
TDM - Time Division Multiplexing
TMN - Telecommunications Management Network
ToCES - TDM over packet Emulation
VCat - Virtual Concatenation
VP - Virtual Path
VT-n - Virtual Tributary (n =1, 3, 9, 12) in SONET
VC-n - Virtual Container (n =1, 2, 3, 4) in SDH

### APPENDIX B - BIBLIOGRAPHY

- [RFC3036]: ETF RFC 3036: "LDP Specification", A. Andersson, L., Doolan, P., Feldman, N., Fredette, and B. Thomas, January 2001.
- [RFC3031]: IETF RFC 3031: "Multiprotocol Label Switching Architecture", January 2001.
- [ITUG703]: ITU-T G.703
- [ITUG707]: ITU-T G.707: "Network node interface for the synchronous digital hierarchy (SDH)".
- [ITUG957]: ITU-T G.957: "Optical Interface for equipment and systems relating to the synchronous digital hierarchy.
- [ITUG7041]: ITUG-T G.7041: "Draft revised Recommendation G.7041 (ex-GFP) (for consent)", STUDY GROUP 15, Temporary document, 21-31 October 2003.
- [MEFD00029]: MEFD00029: Implementation Agreement for SDH/SONET Emulation Service, 1012003 draft.
- [IEEE802.3]: IEEE 802.3-1998: Ethernet Gigabit/s

## Claims

1. Network node including bidirectional interface cards (ETH, HYB, SDC, SYC, PBC), at least a type of the interface cards (HYB) having a first port for ingress/egress of circuit based traffic (SDH-E), a second port for ingress/egress of packet based traffic (GbE), and a third port for egress/ingress of mixed circuit and packet based traffic (SDH-1), said third port being connected to a hybrid switch (HYSW) arranged for routing said mixed circuit and packet based traffic trough the node, **characterized in that**::
each interface card of said at least a type (HYB) includes:
- means (5) for encapsulating incoming packets of variable length into transport frames of variable length provided by a generic frame protocol, called GFP frames hereafter,
- means (5) for embedding said GFP frames into a virtual container of an SDH flow (SDH-I)or of another TDM bus SDH compliant;
- means (15) for combining virtual containers only containing circuit based incoming traffic with said virtual container containing GFP frames into a single SDH flow for mixed traffic (SDH-1) going out from said third port; and
said hybrid switch (HYSW) includes:
- a plurality of means (21) for separating virtual containers relevant to packet based traffic from virtual containers transporting circuit based traffic to be switched as such from a number m of SDH flows (Data_IN_1, ....., Data_)N_m), also termed channels, each one transporting mixed traffic coming from said third port (SDH-1) of the interface cards (HYB);
- first time-switches (CSW) connected to said separating means (21) for receiving bytes of virtual containers from every channel which transport circuit based traffic;
- second time-switches (PSW) connected to said separating means (21) for receiving bytes of virtual containers from every channel which transport packet based traffic;
- GFP header analysing means (22) configured to extract delineation and routing information from the header of the GFP frames relevant to every channel and communicating said information to centralized routing control means (33);
- third time-switches (25) cascaded to both said first (PSW) and second (CSW) time-switches for outputting either packet or circuit type of traffic bytes upon a control signal generated by said centralized routing control means (33);
- SDH flow forming (27-1....27-m) and serializing (28-1....28-m) means cascaded to the third time-switching means (25) for building up output SDH flows (Data_OUT_1,....., Data_OUT_m) directed to said third port (SDH-I)of the interface cards (HYB).

2. The network node of claim 1, **characterized in that that** the interface card of said at least a type (HYB) includes:
- means (15) for splitting said SDH flow for mixed traffic (SDH-I) entering said third port or another TDM bus SDH compliant, into virtual containers of circuit based traffic and packet based traffic separately processed and forwarded towards respective first and second ports;
- means (6) for delineating the begin of the GFP frames embedded into a virtual container of packet based traffic;
- means (6) for de-encapsulating packets from the payload of said delineated GFP frames.

3. The network node of claim 2, **characterized in that** the interface card of said at least a type (HYB) includes:
- means (1) for generating for each packet entering said second ports (GbE) an identifier, called hereafter VLAN-ID, of logical connections valid inside the node except inside said hybrid switch (HYSW) from the combination of source and destination MAC addresses of said packets;
- means (5) for univocally associating each VLAN-ID identifier to an identifier, called hereafter CID, which is used by the hybrid switch (HYSW) to forward packets towards said third ports mapped to the CID values;
- means (5) for extracting said VLAN-ID identifiers from said packets;
- means (5) for introducing said CID identifier in the header,

4. The network node of claim 3, **characterized in that** the interface card of said at least a type (HYB) includes:
- means (6) for retrieving said CID identifiers from the header of the GFP frames;
- means (6) for remapping said CID identifiers onto said VLAN-ID identifiers;
- means (6) for re-inserting said VLAN-ID identifiers into said packets and forwarding the de-capsulated packets towards said second port (GbE,).

5. The network node of claim 3 or 4, **characterized in that** said hybrid switch (HYSW) further includes:
- memory means (32) for storing routing tables indicating the destination ports mapped to all foreseen CID identifiers and to said virtual containers to be switched as such;
- control means (30) for accessing first routing tables using said CID identifiers to get addresses of respective mapped output ports and generating in correspondence control signals towards the second time-switches (PSW) for the selection of the addressed output ports; and for accessing second routing tables to read the address of the output port of the first time-switches (CSW) and generating in correspondence control signals to the selection of the addressed output ports.

6. The network node of any claim from 1 to 5, **characterized in that** said first time-switches (CSW) include m m-input-one-output multiplexer (26), every one for a corresponding channel out of m.

7. The network node of any claim from 1 to 5, **characterized in that** said second time-switches (PSW) include m sets of m m-input-one-output multiplexer (23) every set for a corresponding channel out of m.

8. The network node of claim 6 and 7, **characterized in that** said third time-switches (25) include m m-input-one-output multiplexer (25) every one for a corresponding output channel.

9. The network node of claim 7, **characterized in that** each m-input-one-output multiplexer (23) is followed by a respective serial buffer (24) of given length.

## Patentansprüche

1. Netzknoten, der bidirektionale Schnittstellenkarten (ETH, HYB, SDC, SYC, PBC) enthält, wobei wenigstens ein Typ der Schnittstellenkarten (HYB) einen ersten Port für den Eintritt/Austritt von schaltungsbasiertem Verkehr (SDH-E), einen zweiten Port für den Eintritt/Austritt von paketbasiertem Verkehr (GbE) und einen dritten Port für den Austritt/Eintritt von gemischtem schaltungs- und paketbasiertem Verkehr (SDH-I) besitzt, wobei der dritte Port mit einer Hybridvermittlung (HYSW) verbunden ist, die ausgelegt ist, um den gemischten schaltungs- und paketbasierten Verkehr durch den Knoten zu lenken, **dadurch gekennzeichnet, dass**:
jede Schnittstellenkarte des wenigstens einen Typs (HYB) enthält:
- Mittel (5) zum Einkapseln ankommender Pakete mit variabler Länge in Transportrahmen mit variabler Länge, die durch ein generisches Rahmenprotokoll geschaffen und im Folgenden GFP-Rahmen genannt werden;
- Mittel (5) zum Einbetten der GFP-Rahmen in einen virtuellen Container eines SDH-Flusses (SDH-I) oder eines weiteren mit SDH verträglichen TDM-Busses;
- Mittel (15) zum Kombinieren virtueller Container, die nur schaltungsbasierten ankommenden Verkehr enthalten, mit dem virtuellen Container, der GFP-Rahmen enthält, zu einem einzigen SDH-Fluss für gemischten Verkehr (SDH-I), der von dem dritten Port abgeht; und
wobei die Hybridvermittlung (HYSW) enthält:
- mehrere Mittel (21) zum Separieren virtueller Container, die für paketbasierten Verkehr relevant sind, von virtuellen Containern, die schaltungsbasierten Verkehr transportieren, der als solcher von einer Anzahl m von SDH-Flüssen (Data_IN_1, ..., Data_IN_m), die auch Kanäle genannt werden und wovon jeder gemischten Verkehr transportiert, der von dem dritten Port (SDH-I) der Schnittstellenkarten (HYB) ankommt, vermittelt werden soll;
- erste Zeitschalter (CSW), die mit den Separierungsmitteln (21) verbunden sind, um Bytes virtueller Container von jedem Kanal, die schaltungsbasierten Verkehr transportieren, zu empfangen;
- zweite Zeitschalter (PSW), die mit den Separierungsmitteln (21) verbunden sind, um Bytes virtueller Container von jedem Kanal, die paketbasierten Verkehr transportieren, zu empfangen;
- GFP-Kopfsatz-Analysemittel (22), die konfiguriert sind, um Darstellungs- und Lenkungsinformationen von dem Kopfsatz der GFP-Rahmen, die für jeden Kanal relevant sind, zu extrahieren und um die Informationen an zentralisierte Lenkungssteuermittel (33) zu übermitteln;
- dritte Zeitschalter (25), die mit den ersten Zeitschaltern (PSW) und den zweiten Zeitschaltern (CSW) kaskadenartig verbunden sind, um entweder Bytes des paketartigen Verkehrs oder Bytes des schaltungsartigen Verkehrs bei einem durch die zentralisierten Lenkungssteuermittel (33) erzeugten Steuersignal auszugeben;
- SDH-Fluss-Bildungsmittel (27-1, ..., 27-m) und SDH-Fluss-Serialisierungsmittel (28-1, ..., 28-m), die mit den dritten Zeitschaltmitteln (25) kaskadenartig verbunden sind, um Ausgangs-SDH-Flüsse (Data_OUT_1, ..., Data_OUT_m) aufzubauen, die zu dem dritten Port (SDH-I) der Schnittstellenkarten (HYB) gerichtet sind.

2. Netzknoten nach Anspruch 1, **dadurch gekennzeichnet, dass** die Schnittstellenkarte des wenigstens einen Typs (HYB) enthält:
- Mittel (15) zum Aufteilen des SDH-Flusses für gemischten Verkehr (SDH-I), der in den dritten Port eintritt, oder des weiteren mit SDH verträglichen TDM-Busses in virtuelle Container von schaltungsbasiertem Verkehr und von paketbasiertem Verkehr, die getrennt verarbeitet und zu dem ersten bzw. zweiten Port weitergeleitet werden;
- Mittel (6) zum Darstellen des Beginns der GFP-Rahmen, die in einen virtuellen Container von paketbasiertem Verkehr eingebettet sind;
- Mittel (6) zum Entkapseln von Paketen aus der Nutzlast der dargestellten GFP-Rahmen.

3. Netzknoten nach Anspruch 2, **dadurch gekennzeichnet, dass** die Schnittstellenkarte des wenigstens einen Typs (HYB) enthält:
- Mittel (1), um für jedes in die zweiten Ports (GbE) eintretende Paket einen im Folgenden VLAN-ID genannten Identifizierer für logische Verbindungen, die in dem Knoten außer innerhalb der Hybridvermittlung (HYSW) gültig sind, aus der Kombination von Quell- und Ziel-MAC-Adressen der Pakete zu erzeugen;
- Mittel (5) zum eindeutigen Zuordnen jedes VLAN-ID-Identifizierers zu einem im Folgenden CID genannten Identifizierer, der von der Hybridvermittlung (HYSW) verwendet wird, um Pakete zu den dritten Ports, die auf die CID-Werte abgebildet sind, weiterzuleiten;
- Mittel (5), um die VLAN-ID-Identifizierer aus den Paketen zu extrahieren;
- Mittel (5) zum Einführen des CID-Identifizierers in den Kopfsatz.

4. Netzknoten nach Anspruch 3, **dadurch gekennzeichnet, dass** die Schnittstellenkarte des wenigstens einen Typs (HYB) enthält:
- Mittel (6) zum Wiedergewinnen der CID-Identifizierer aus dem Kopfsatz der GFP-Rahmen;
- Mittel (6) zum erneuten Abbilden der CID-Identifizierer auf die VLAN-ID-Identifizierer;
- Mittel (6) zum erneuten Einsetzen der VLAN-ID-Identifizierer in die Pakete und zum Weiterleiten der entkapselten Pakete zu dem zweiten Port (GbE).

5. Netzknoten nach Anspruch 3 oder 4, **dadurch gekennzeichnet, dass** die Hybridvermittlung (HYSW) ferner enthält:
- Speichermittel (32), um Lenkungstabellen zu speichern, die die Ziel-Ports angeben, die auf alle vorgesehenen CID-Identifizierer und auf die virtuellen Container, die als solche vermittelt werden sollen, abgebildet sind; und
- Steuermittel (30), um auf erste Lenkungstabellen unter Verwendung der CID-Identifizierer zuzugreifen, um Adressen jeweiliger abgebildeter Ausgangsports zu erhalten, und um entsprechende Steuersignale zu den zweiten Zeitschaltern (PSW) zu erzeugen, um die adressierten Ausgangsports auszuwählen; und um auf zweite Lenkungstabellen zuzugreifen, um die Adressen des Ausgangsports der ersten Zeitschalter (CSW) zu lesen, und um entsprechende Steuersignale für die Auswahl der adressierten Ausgangsports zu erzeugen.

6. Netzknoten nach einem der Ansprüche 1 bis 5, **dadurch gekennzeichnet, dass** die ersten Zeitschalter (CSW) m Multiplexer (26) mit m Eingängen und einem Ausgang, jeder für einen entsprechenden von m Kanälen, enthalten.

7. Netzknoten nach einem der Ansprüche 1 bis 5, **dadurch gekennzeichnet, dass** die zweiten Zeitschalter (PSW) m Mengen von m Multiplexern (23) mit m Eingängen und einem Ausgang, jede für einen entsprechenden von m Kanälen, enthalten.

8. Netzknoten nach Anspruch 6 oder 7, **dadurch gekennzeichnet, dass** die dritten Zeitschalter (25) m Multiplexer (25) mit m Eingängen und einem Ausgang, jeder für einen entsprechenden Ausgangskanal, enthalten.

9. Netzknoten nach Anspruch 7, **dadurch gekennzeichnet, dass** jedem Multiplexer (23) mit m Eingängen und einem Ausgang ein entsprechender serieller Puffer (24) mit gegebener Länge folgt.

## Revendications

1. Noeud de réseau incluant des cartes d'interface bidirectionnelle (ETH, HYB, SDC, SYC, PBC), au moins un type de cartes d'interface (HYB) ayant un premier port pour l'entrée/sortie d'un trafic par circuit (SDH-E), un deuxième port pour l'entrée/sortie d'un trafic par paquets (GbE) et un troisième port pour la sortie/entrée d'un trafic mixte par circuit et par paquets (SDH-I), ledit troisième port étant connecté à un commutateur hybride (HYSW) adapté pour router ledit trafic mixte par circuit et par paquets à travers le noeud, **caractérisé en ce que**:
chaque carte d'interface dudit au moins un type (HYB) inclut :
- un moyen (5) pour encapsuler des paquets entrants de longueur variable dans des trames de transport de longueur variable fournies par un protocole de trame générique, que nous appellerons trames GFP ;
- un moyen (5) pour incorporer lesdites trames GFP dans un conteneur virtuel d'un flux SDH (SDH-I) ou d'un autre bus TDM compatible SDH ;
- un moyen (15) pour combiner des conteneurs virtuels contenant uniquement un trafic entrant par circuit audit conteneur virtuel contenant des trames GFP pour obtenir un flux SDH unique pour le trafic mixte (SDH-I) sortant dudit troisième port ; et
ledit commutateur hybride (HYSW) inclut :
- une pluralité de moyens (21) pour séparer des conteneurs virtuels en rapport avec un trafic par paquets de conteneurs virtuels transportant un trafic par circuit devant être commuté en tant que tel, lesquels conteneurs appartiennent à un nombre m de flux SDH (Data_IN_1, ..., Data_IN_m), également appelés canaux, chacun transportant un trafic mixte venant dudit troisième port (SDH-I) des cartes d'interface (HYB) ;
- des premiers commutateurs temporels (CSW) connectés audit moyen de séparation (21) pour recevoir des octets de conteneurs virtuels de chaque canal transportant un trafic par circuit ;
- des deuxièmes commutateurs temporels (PSW) connectés audit moyen de séparation (21) pour recevoir des octets de conteneurs virtuels de chaque canal transportant un trafic par paquets ;
- un moyen d'analyse d'en-tête GFP (22) configuré pour extraire une information de délimitation et de routage de l'en-tête des trames GFP en rapport avec chaque canal et communiquer ladite information à un moyen de commande de routage centralisé (33) ;
- des troisièmes commutateurs temporels (25) montés en cascade à la fois avec lesdits premiers (PSW) et lesdits seconds (CSW) commutateurs temporels pour sortir un type d'octets de trafic soit par paquets, soit par circuit, en réponse à un signal de commande généré par ledit moyen de commande de routage centralisé (33) ;
- un moyen de formation (27-1, ..., 27-m) et de sérialisation (28-1, ..., 28-m) de flux SDH monté en cascade avec le troisième moyen de commutation temporelle (25) pour constituer des flux SDH de sortie (Data_OUT_1, ..., Data_OUT_m) dirigés vers ledit troisième port (SDH-I) des cartes d'interface (HYB).

2. Noeud de réseau selon la revendication 1, **caractérisé en ce que** la carte d'interface dudit au moins un type (HYB) inclut :
- un moyen (15) pour diviser ledit flux SDH pour un trafic mixte (SDH-I) entrant dans ledit troisième port, ou un autre bus TDM compatible SDH, en conteneurs virtuels de trafic par circuit et de trafic par paquets traités séparément et acheminés vers les premiers et deuxièmes ports respectifs ;
- un moyen (6) pour délimiter le début des trames GFP incorporées dans un conteneur virtuel de trafic par paquets ;
- un moyen (6) pour désencapsuler des paquets de la charge utile desdites trames GFP délimitées.

3. Noeud de réseau selon la revendication 2, **caractérisé en ce que** la carte d'interface dudit au moins un type (HYB) inclut :
- un moyen (1) pour générer, pour chaque paquet entrant dans lesdits deuxièmes ports (GbE), un identifiant, appelé ci-dessous VLAN-ID, de connexions logiques valides à l'intérieur du noeud, sauf à l'intérieur dudit commutateur hybride (HYSW), à partir de la combinaison des adresses MAC source et de destination desdits paquets ;
- un moyen (5) pour associer de manière univoque chaque identifiant VLAN-ID à un identifiant, appelé ci-dessous CID, utilisé par le commutateur hybride (HYSW) pour acheminer des paquets vers lesdits troisièmes ports mappés sur les valeurs CID ;
- un moyen (5) pour extraire lesdits identifiants VLAN-ID desdits paquets ;
- un moyen (5) pour introduire ledit identifiant CID dans l'en-tête.

4. Noeud de réseau selon la revendication 3, **caractérisé en ce que** la carte d'interface dudit au moins un type (HYB) inclut :
- un moyen (6) pour récupérer lesdits identifiants CID de l'en-tête des trames GFP ;
- un moyen (6) pour remapper lesdits identifiants CID sur lesdits identifiants VLAN-ID ;
- un moyen (6) pour réinsérer lesdits identifiants VLAN-ID dans lesdits paquets et acheminer les paquets désencapsulés vers ledit deuxième port (GbE).

5. Noeud de réseau selon la revendication 3 ou 4, **caractérisé en ce que** ledit commutateur hybride (HYSW) inclut, en outre :
- un moyen de mémoire (32) pour enregistrer des tables de routage indiquant les ports de destination mappés sur tous les identifiants CID prévus et sur lesdits conteneurs virtuels devant être commutés en tant que tels ;
- un moyen de commande (30) pour accéder à des premières tables de routage en utilisant lesdits identifiants CID pour obtenir des adresses de ports de sortie mappés respectifs, et pour générer en conséquence des signaux de commande vers les deuxièmes commutateurs temporels (PSW) pour la sélection des ports de sortie adressés ; et pour accéder à des secondes tables de routage pour lire l'adresse du port de sortie des premiers commutateurs temporels (CSW) et générer en conséquence des signaux de commande pour la sélection des ports de sortie adressés.

6. Noeud de réseau selon l'une quelconque des revendications 1 à 5, **caractérisé en ce que** lesdits premiers commutateurs temporels (CSW) incluent m multiplexeurs m-entrée-une-sortie (26), chacun pour un canal correspondant parmi m.

7. Noeud de réseau selon l'une quelconque des revendications 1 à 5, **caractérisé en ce que** lesdits deuxièmes commutateurs temporels (PSW) incluent m ensembles de m multiplexeurs m-entrée-une-sortie (23), chaque ensemble pour un canal correspondant parmi m.

8. Noeud de réseau selon les revendications 6 et 7, **caractérisé en ce que** lesdits troisièmes commutateurs temporels (25) incluent m multiplexeurs m-entrée-une-sortie (25), chacun pour un canal de sortie correspondant.

9. Noeud de réseau selon la revendication 7, **caractérisé en ce que** chaque multiplexeur m-entrée-une-sortie (23) est suivi d'une mémoire tampon série respective (24) d'une longueur donnée.
